# EUROPEAN PATENT APPLICATION

(11) **EP 4 277 010 A1**
(43) Date of publication of application: **15.11.2023**
(21) Application number: 22821828.5
(22) Date of filing: 12.10.2022
(51) Int. Cl.: H01M 50/533, H01M 10/0587, H01M 10/052

(54) **ELECTRODE ASSEMBLY AND ENERGY STORAGE DEVICE**

(30) Priority: 18.08.2022 CN 202222175052 U
(71) Applicant: Eve Power Co., Ltd., Jingmen, Hubei 448000 (CN)
(72) Inventor: DING, Dapei, Jingmen Hubei 448000 (CN); CHEN, Qiang, Jingmen Hubei 448000 (CN); YAN, Bo, Jingmen Hubei 448000 (CN); LIU, Jing, Jingmen Hubei 448000 (CN); XU, Yuebin, Jingmen Hubei 448000 (CN); HE, Wei, Jingmen Hubei 448000 (CN)
(74) Representative: De Arpe Tejero, Manuel
(86) International application number: PCT/CN2022/124937
(87) International publication number: WO 2023/173732

(57) **Abstract**

The present application provides an electrode assembly and an energy storage device. The electrode assembly includes an electrode assembly body and a current collector. The electrode assembly body is wound in shape; the current collector is arranged at an end of the electrode assembly body and includes multiple current collector units each bent towards an axis of the electrode assembly body, and an angle between each current collector unit and the axis of the electrode assembly body is in a range from 0° to 90°. In the present application, the multiple current collector units are arranged in an orderly manner toward the center of the electrode assembly, which is conducive to improving the subsequent welding stability of the current collector units with the sink plate. The multiple current collector units are arranged in an orderly manner toward the center of the electrode assembly, such that the current collector does not rotate and there is no friction, and no metal chips are generated during processing, which will not affect the safety performance of the electrode assembly and thus ensure the safety performance of the energy storage device.

## Description

This application claims foreign priority to Chinese Patent Application No. 202222175052.5, filed in China National Intellectual Property Administration on August 18, 2022, the content of which is herein incorporated by reference in its entirety.

### TECHNICAL FIELD

The present disclosure relates to the field of battery technologies, for example, to an electrode assembly and an energy storage device.

### BACKGROUND

Lithium batteries have many advantages, such as having a light weight, a large energy storage, a high power, a stable discharge performance, and a long service life. Therefore, the lithium batteries have been widely used in the field of electric bicycles and new energy vehicles. Electrode assemblies are the most important components inside the batteries, and the qualities of the electrode assemblies directly affect the performance of the batteries.

In the related art, energy densities of the electrode assemblies are insufficient, which affects performances of energy storage devices.

### SUMMARY

The present disclosure provides an electrode assembly and an energy storage device to solve the technical problem of insufficient energy density of the electrode assembly, which affects the performance of the energy storage device, existing in the related art.

In a first aspect, some embodiments of the present disclosure provide an electrode assembly, and the electrode assembly includes: an electrode assembly body, wound in shape; and a current collector, arranged at an end of the electrode assembly body and including a plurality of current collector units each bent towards an axis of the electrode assembly body, and an angle between each current collector unit and the axis of the electrode assembly body is in a range from 0° to 90°.

In some embodiments, the current collector is wound in shape and includes a front portion of the current collector, a middle portion of the current collector and a back portion of the current collector, which are arranged in sequence from a center of the electrode assembly along a winding path of the current collector.

In some embodiments, an absolute value of a difference in size between the front portion and the back portion from the center of the electrode assembly along the winding path of the current collector is in a range from 0mm to 1000mm.

In some embodiments, an absolute value of a difference in size between the front portion and the middle portion from the center of the electrode assembly along the winding path of the current collector is in a range from 0mm to 8000mm.

In some embodiments, an absolute value of a difference in size between the back portion and the middle portion from the center of the electrode assembly along the winding path of the current collector is in a range from 0mm to 8000mm.

In some embodiments, from the center of the electrode assembly along the winding path, a size l of the front portion in a range from 0mm to 1000mm; and/or a size m of the middle portion is in a range from 1000mm to 8000mm.

In some embodiments, from the center of the electrode assembly along the winding path, a size n of the back portion is in a range from 0mm to 1000mm.

In some embodiments, an outer diameter o of a winding body formed after winding of the front portion is in a range from 1mm to 100mm; and/or
an outer diameter p of a winding body formed after winding of the middle portion is in a range from 1mm to 100mm.

In some embodiments, an outer diameter q of a winding body formed after winding of the back portion is in a range from 1mm to 100mm.

In some embodiments, a hollow cylindrical cavity is defined in the electrode assembly body, and a diameter b of the hollow cylindrical cavity is in a range from 1mm to 10mm.

In some embodiments, a hollow cylindrical cavity is defined in the electrode assembly body, and a difference between an outer diameter o of a winding body formed after winding of the front portion and a diameter b of the hollow cylindrical cavity is in a range from 0mm to 100mm; and/or a difference between an outer diameter p of a winding body formed after winding of the middle portion and the outer diameter o of the winding body formed after winding of the front portion is in a range from 0mm to 100mm.

In some embodiments, a difference between an outer diameter q of a winding body formed after winding of the back portion and an outer diameter p of a winding body formed after winding of the middle portion is in a range from 0mm to 100mm.

In some embodiments, the front portion is in the form of a monolithic sheet or includes a plurality of current collector units; and/or the middle portion is in the form of a monolithic sheet or includes a plurality of current collector units.

In some embodiments, the back portion is in the form of a monolithic sheet or includes a plurality of current collector units.

In some embodiments, an outer side of the electrode assembly body is wound with a diaphragm with a size r of 20mm-300mm along an axis of the electrode assembly.

In some embodiments, along the axis of the electrode assembly, an exposed size s of the current collector relative to the diaphragm is in a range from 0mm to 10mm.

In some embodiments, an axial size t of the electrode assembly is in a range from 30mm to 300mm.

In some embodiments, an outer diameter u of the electrode assembly body is in a range from 15mm to 100mm.

In some embodiments, a shape of each current collector unit is a parallelogram, a height e of the each current collector unit is in a range from 2mm to 10mm, a width d of the each current collector unit is in a range from 2mm to 40mm, and an inner angle of the each current collector unit is in a range from 45° to 135°.

In some embodiments, a slit exists between adjacent two of the plurality of current collector units, and a spacing of the slit is in a range from 0mm to 200mm.

In some embodiments, the current collector is wound in shape, all the plurality of current collector units are wound and arranged to form a plurality of current collector circles, and each current collector circle includes some of the plurality of current collector units arranged in sequence.

In some embodiments, among adjacent two of the plurality of current collector circles, one current collector circle farther away from an axis of the electrode assembly body is an outer current collector circle, and the other current collector circle is an inner current collector circle; and along a radial direction of the electrode assembly body, the plurality of current collector units of the outer current collector circle partially cover the plurality of current collector units of the inner current collector circle.

In a second aspect, some embodiments of the present disclosure provide an energy storage device, including: a housing; and the electrode assembly as above, arranged in the housing.

Technical effect of the present disclosure.

In the electrode assembly provided in the embodiments, the current collector includes multiple current collector units, and the multiple current collector units are flattened such that the angle between each current collector unit and the axis of the electrode assembly body 1 is in a range from 0° to 90°, which may avoid the current collector unit from overturning relative to the electrode assembly, control the exposed size of the current collector relative to the electrode assembly, and increase the axial size proportion of the material region relative to the electrode assembly, thereby improving the battery capacity and "overhang" design, and thus increasing the energy density of the cell.

The orderly arrangement of multiple current collector units toward the center of the electrode assembly is conducive to improving the subsequent welding stability of the current collector units with the sink plate. The multiple current collector units are arranged in an orderly manner toward the center of the electrode assembly, such that the current collector does not rotate and there is no friction, and no metal chips are generated during processing, which will not affect the safety performance of the electrode assembly, and thus ensure the safety performance of the energy storage device.

The energy storage device includes the above electrode assembly. In the electrode assembly, the angle between each current collector unit and the axis of the electrode assembly body is in a range from 0° to 90°. The orderly arrangement of the current collector units toward the center of the electrode assembly is conducive to improving the subsequent welding stability of the current collector units with the sink plate. The multiple current collector units are arranged in an orderly manner toward the center of the electrode assembly, such that the current collector does not rotate and there is no friction, and no metal chips are generated during processing, which will not affect the safety performance of the electrode assembly and thus ensure the safety performance of the energy storage device.

### BRIEF DESCRIPTION OF THE DRAWINGS

FIG. 1 is a front schematic view of an electrode assembly according to Embodiment 1 of the present disclosure.
FIG. 2 is a top schematic view of an electrode assembly according to Embodiment 1 of the present disclosure.
FIG. 3 is a schematic view of a positive electrode tab arranged on a positive electrode sheet body according to Embodiment 1 of the present disclosure.
FIG. 4 is a schematic view of a negative electrode tab arranged on a negative electrode sheet body according to Embodiment 1 of the present disclosure.
FIG. 5 is a schematic view of tabs of an electrode assembly in a state that a pre-bending process has been finished according to Embodiment 1 of the present disclosure.
FIG. 6 is a schematic view of a position relationship between a positive electrode tab unit and an axis of an electrode assembly according to Embodiment 1 of the present disclosure.
FIG. 7 is a schematic view of an electrode assembly before winding according to Embodiment 2 of the present disclosure.
FIG. 8 is a top schematic view of an electrode assembly according to Embodiment 2 of the present disclosure.
FIG. 9 is a schematic view of an electrode assembly to be flattened according to Embodiment 2 of the present disclosure.
FIG. 10 is a schematic view of an electrode assembly according to Embodiment 2 of the present disclosure.

### Reference numerals.

1, electrode assembly body; 11, hollow cylindrical cavity; 12, positive electrode sheet body; 121, positive material region; 122, first transition region; 13, negative electrode sheet body; 131, negative material region; 132, second transition region.
2, positive electrode tab; 21, positive electrode tab unit or positive electrode single tab; 22, positive electrode notch portion; 23, front portion of the current collector; 24, middle portion of the current collector; 25, back portion of the current collector.
3, negative electrode tab; 31, negative electrode tab unit or negative electrode single tab; 32, negative electrode notch portion.

### DETAILED DESCRIPTION

In the description of the present disclosure, orientations or positional relationships indicated by terms "center", "up", "down", "left", "right", "vertical", "horizontal", "inside", "outside", etc. are based on the orientations or position relationships shown in the accompanying drawings, and are only for the convenience of describing the present disclosure and simplifying the description, rather than implying or indicating that the device or the component referred to must have a particular orientation or constructed and operated in a particular orientation, and thus these terms cannot be understood as limiting the present disclosure. In addition, terms "first" and "second" are for descriptive purposes only and cannot be construed as indicating or implying relative importance. Terms "first position" and "second position" refer to two different positions.

In the description of the present disclosure, unless specified and limited, otherwise, terms "mounted", "coupled", "connected" and the like should be used in a broad sense, and may be, for example, a fixed connection or a detachable connection; may also be a mechanical connection or an electrical connection; may also be a direct connection, indirect connection through an intermediate structure, or inner communications of two components. For those skilled in the art, the meaning of the above terms in the present disclosure may be understood according to specific contexts.

In a lithium-ion battery, overhang, or covering amount, is a portion of the negative electrode sheet protruding from the positive electrode sheet in length and width directions. When an external power supply charges the lithium-ion battery, electrons on the positive electrode move to the negative electrode through an external circuit, and lithium ions Li⁺ "jump" into electrolyte from inside of active material particles of the positive electrode, "crawl" through small, curved pores of the diaphragm, "swim" to the negative electrode, combine with the electrons that have reached the negative electrode long ago, and enter the inside of active material particles of the negative electrode. If the negative electrode does not have positions for receiving the lithium ions, the lithium ions will precipitate on the surface of the negative electrode, forming lithium dendrites, and piercing the diaphragm, thereby causing a short circuit within the battery and triggering thermal runaway. Therefore, in the design of lithium batteries, the negative electrode often requires an excessive design to avoid such situations, thus, the "overhang" design is required.

### Embodiment 1

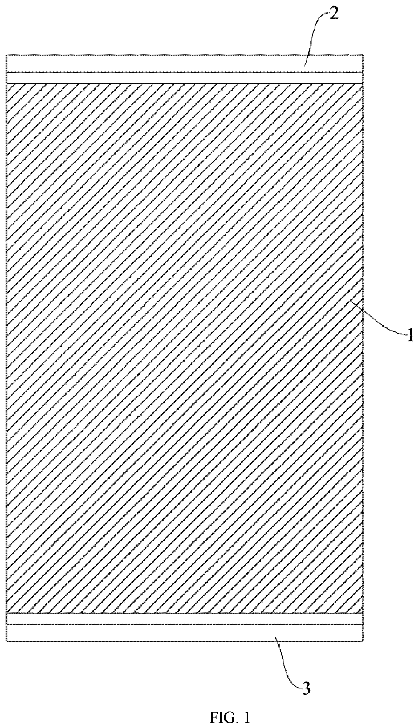

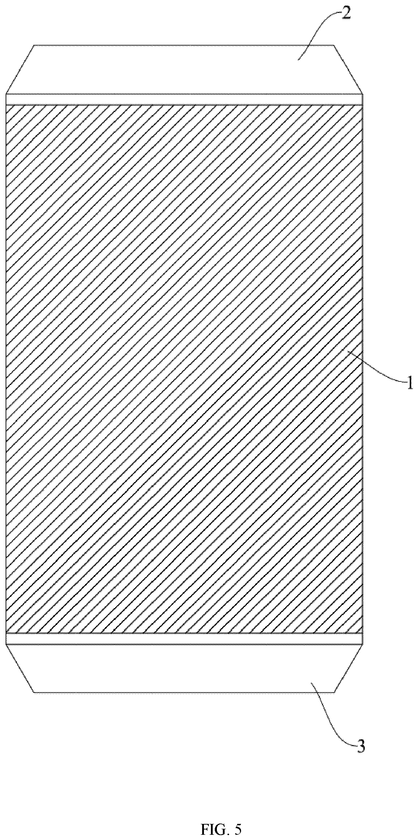

As shown in FIGS. 1-FIG. 5, embodiments provide an electrode assembly with improved battery capacity and "overhang" design compared to the related art, which in turn facilitates the improvement of the energy density of the cell.

The electrode assembly is a cell.

In the embodiments, the electrode assembly is a multi-layer winding structure.

The electrode assembly includes an electrode assembly body 1 and a current collector arranged at an end of the electrode assembly body 1. The current collector includes multiple current collector units each bent towards an axis of the electrode assembly body 1. The angle between each current collector unit and the axis of the electrode assembly body 1 is in a range from 0° to 90°.

In some embodiments, the current collector includes a positive electrode tab 2 and a negative electrode tab 3.

The electrode assembly body 1 is wound in shape.

The positive electrode tab 2 is arranged at an end of the electrode assembly body 1 and includes multiple positive electrode tab units 21 each bent towards the axis of the electrode assembly body 1, i.e., the current collector unit of the positive electrode tab 2 is a positive electrode tab unit 21, and the angle between each positive electrode tab unit 21 and the axis of the electrode assembly body 1 is in a range from 60° to 90°, such as 65°, 70°, 75°, 80°, or 85°.

The negative electrode tab 3 is arranged at the other end of the electrode assembly body 1 and includes multiple negative electrode tab units 31 each bent towards the axis of the electrode assembly body 1, i.e., the current collector unit of the negative electrode tab 3 is the negative electrode tab unit 31, and the angle between each negative electrode tab unit 31 and the axis of the electrode assembly body 1 is in a range from 60° to 90°, such as 65°, 70°, 75°, 80°, or 85°.

In the electrode assembly provided in the embodiments, the positive electrode tab 2 includes multiple positive electrode tab units 21 and the negative electrode tab 3 includes multiple negative electrode tab units 31; the multiple positive electrode tab units 21 and the multiple negative electrode tab units 31 are processed to cause the angle between each positive electrode tab unit 21 and the axis of the electrode assembly body 1 to be in the range from 60° to 90° and the angle between each negative electrode tab unit 31 and the axis of the electrode assembly body 1 to be in the range from 60° to 90°, which is conducive to the improvement of the battery capacity and "overhang" design, and thus conducive to the improvement of the energy density of the cell.

In addition, in the embodiments, the angle between the positive electrode tab unit 21 and the axis of the electrode assembly body 1 is in the range from 60° to 90°, and the angle between the negative electrode tab unit 31 and the axis of the electrode assembly body 1 is in the range from 60° to 90°, which may avoid the positive electrode tab unit 21 and the negative electrode tab unit 31 from overturning and control a size of an exposed portion of the electrode tab relative to the electrode assembly, which is conducive to the improvement of the energy density of the cell and also may ensure the subsequent welding stability of the positive electrode tab 2 and negative electrode tab 3 with a sink plate.

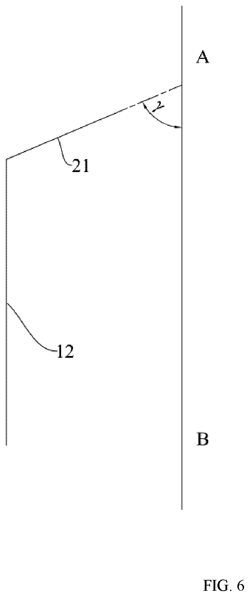

Exemplarily, as shown in FIG. 6, the straight line AB represents the axis of the electrode assembly body 1, the broken line is an extension line of the positive electrode tab unit 21 toward the straight line AB, and angle γ represents the angle between the positive electrode tab unit 21 and the axis of the electrode assembly body 1. That is, the angle γ is in the range from 60° to 90°. Accordingly, the angle between the negative electrode tab unit 31 and the axis of the electrode assembly body 1 is schematically shown in the same way as the angle γ is schematically shown.

The axis of the electrode assembly body 1 is the axis of the electrode assembly.

In some embodiments, the angle γ between the positive electrode tab unit 21 and the axis of the electrode assembly body 1 is 90°, and the angle between the negative electrode tab unit 31 and the axis of the electrode assembly body 1 is 90°.

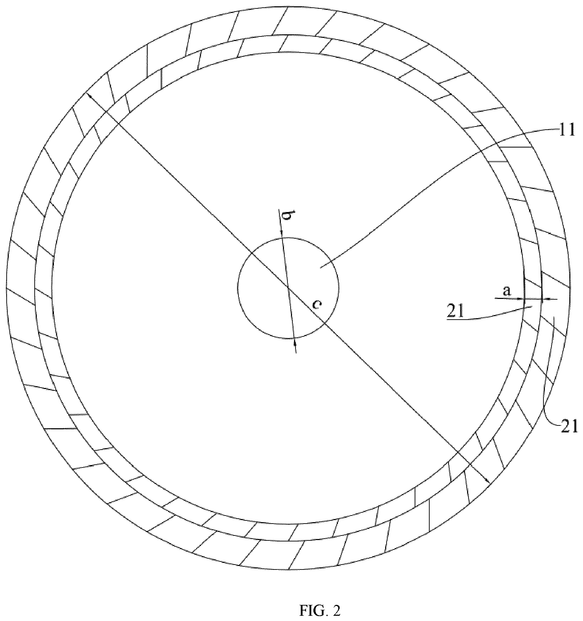

As shown in FIG. 2, in some embodiments, along a radial direction of the electrode assembly, the distance a between free ends of two adjacent positive electrode tab units 21 is greater than or equal to 0.1 mm and less than or equal to 1 mm. The distance a between the free ends of the two adjacent positive electrode tab units 21 is less than or equal to 1 mm, which is conducive to improving the integration of the electrode assembly, and thus conducive to improving the energy density of the cell. The distance a between the free ends of the two adjacent positive electrode tab units 21 along the radial direction of the electrode assembly is greater than or equal to 0.1mm, which is easy to achieve in the process.

As shown in FIG. 2, the distance between the free ends of the two adjacent positive electrode tab units 21 along the radial direction of the electrode assembly is a. a is greater than or equal to 0.1 mm and less than or equal to 1 mm, i.e., a is in a range from 0.1 mm to 1 mm. For example, a is 0.1 mm, 0.2 mm, 0.3 mm, 0.4 mm, 0.5 mm, 0.6 mm, 0.7 mm, 0.8 mm, 0.9 mm, or 1 mm. The distance a being greater than or equal to 0.1mm may reduce the manufacturing difficulty when winding; being less than or equal to 1mm may be conducive to improving the compactness of winding, ensuring the quality of electrode assembly, and improving the integration of electrode assembly, which in turn is conducive to the improvement of energy density of cell. In FIG. 2, only the positive electrode tab units 21 with dual-circle arrangement is shown for visual illustration, and the number of circles, i.e., the number of layers of winding, may be set according to the need when designing, without limitation herein.

In the radial direction of the electrode assembly, the distance between free ends of two adjacent negative electrode tab units 31 is greater than or equal to 0.1 mm and less than or equal to 1 mm. For example, the distance between the free ends of the two adjacent negative electrode tab units 31 is 0.1 mm, 0.2 mm, 0.3 mm, 0.4 mm, 0.5 mm, 0.6 mm, 0.7 mm, 0.8 mm, 0.9 mm, or 1 mm. The distance being greater than or equal to 0.1mm may reduce the manufacturing difficulty when winding; being less than or equal to 1mm may be conducive to improving the compactness of winding, ensuring the quality of electrode assembly, and improving the integration of electrode assembly, which in turn is conducive to the improvement of energy density of cell.

In the embodiments, the electrode assembly body 1 includes a positive electrode sheet and a negative electrode sheet. A diaphragm is arranged between the positive electrode sheet and the negative electrode sheet. The positive electrode sheet, the diaphragm, and the negative electrode sheet are wound in a certain way for a certain number of circles, thereby forming the electrode assembly. The positive electrode tab 2 and the negative electrode tab 3 are disposed at the two ends of the electrode assembly, respectively.

The positive electrode tab 2 is disposed at an end of the positive electrode sheet and the negative electrode tab 3 is disposed at an end of the negative electrode sheet.

As shown in FIG. 2, during the actual winding, the positive electrode tab 2 is spirally wound, and multiple positive electrode tab units 21 of the positive electrode tab 2 are also spirally arranged at an end of the electrode assembly, i.e., the multiple positive electrode tab units 21 are wound to form multiple positive electrode tab circles, each of which has several positive electrode tab units 21. Herein, two adjacent circles of positive electrode tab units 21 are taken as an example for description, where the circle of positive electrode tab units 21 near the electrode assembly are referred to as inner-circle positive electrode tab units, and the circle of positive electrode tab units 21 away from the electrode assembly are referred to as outer-circle positive electrode tab units. Roots of the inner-circle positive electrode tab units are overlapped with free ends of the outer-circle positive electrode tab units, and the distance between the free end of an inner-circle positive electrode tab unit and the free end of a corresponding outer-circle positive electrode tab unit is the distance a between the free ends of the two adjacent positive electrode tab unit 21 along the radial direction of the electrode assembly. Only the outermost two circles of the positive electrode tab units 21 are illustrated in FIG. 2.

That is, in the embodiments, the positive electrode tab 2 is wound in shape, and all the positive electrode tab units 21 are wound and arranged to form multiple positive electrode tab circles, each of which includes several positive electrode tab units 21 arranged in sequence.

Among the two adjacent positive electrode tab circles, one positive electrode tab circle which is farther from the axis of the electrode assembly body 1 is an outer positive electrode tab circle, and the other positive electrode tab circle is an inner positive electrode tab circle. Along the radial direction of the electrode assembly, the positive electrode tab units 21 of the outer positive electrode tab circle may partially cover the positive electrode tab units 21 of the inner positive electrode tab circle.

In FIG. 2, only the two outermost positive electrode tab circles are shown for visual illustration. On an inner side of the inner positive electrode tab circle in FIG. 2, multiple positive electrode tab circles may be distributed.

FIG. 2 shows the arrangement of the positive electrode tab circles in an ideal state. In an actual manufacturing process, it may happen that two adjacent positive electrode tab units 21 in the same positive electrode tab circle may have one partially covering the other.

Similarly, the negative positive electrode tab 3 is arranged in the same form as the positive electrode tab 2.

During the actual winding, the negative electrode tab 3 is spirally wound, and multiple negative electrode tab units 31 of the negative electrode tab 3 are spirally arranged at the other end of the electrode assembly, i.e., the multiple negative electrode tab units 31 are wound to form multiple negative electrode tab circles, each of which has several negative electrode tab units 31. Herein, two adjacent circles of negative electrode tab units 31 are taken as an example for description, where the circle of negative electrode tab units 31 near the electrode assembly are referred to as inner-circle negative electrode tab units, and the circle of negative electrode tab units 31 away from the electrode assembly are referred to as outer-circle negative electrode tab units. Roots of the inner-circle negative electrode tab units are overlapped with free ends of the outer-circle negative electrode tab units, and the distance between the free end of an inner-circle negative electrode tab unit and the free end of a corresponding outer-circle negative electrode tab unit is the distance between the free ends of the two adjacent negative electrode tab unit 31 along the radial direction of the electrode assembly.

That is, in the embodiments, the negative electrode tab 3 is wound in shape, and all the negative electrode tab units 31 are wound and arranged to form multiple negative electrode tab circles, each of which includes several negative electrode tab units 31 arranged in sequence.

Among the two adjacent negative electrode tab circles, one negative electrode tab circle which is farther from the axis of the electrode assembly body 1 is an outer negative electrode tab circle, and the other negative electrode tab circle is an inner negative electrode tab circle. Along the radial direction of the electrode assembly, the negative electrode tab units 31 of the outer negative electrode tab circle may partially cover the negative electrode tab units 31 of the inner negative electrode tab circle.

The arrangement form of the negative electrode tab 3 is the same as the arrangement form of the positive electrode tab 2 shown in FIG. 2. In the actual manufacturing process, it may happen that two adjacent negative electrode tab units 31 in the same negative electrode tab circle may have one partially covering the other.

The diameter c of the electrode assembly body 1 is in a range from 42mm to 48mm. for example, c is 42mm, 43mm, 44mm, 45mm, 46mm, 47mm, or 48mm.

Compared with 18650 cells (i.e., electrode assemblies with a diameter of 18mm and a height of 65mm) in the related art, the diameter c of the electrode assembly body 1 in the embodiments is in the range from 42mm to 48mm. That is, the electrode assembly in the embodiments is a large electrode assembly, which has the advantage of high energy density and high overcurrent capability.

The height of the electrode assembly may be set according to the need.

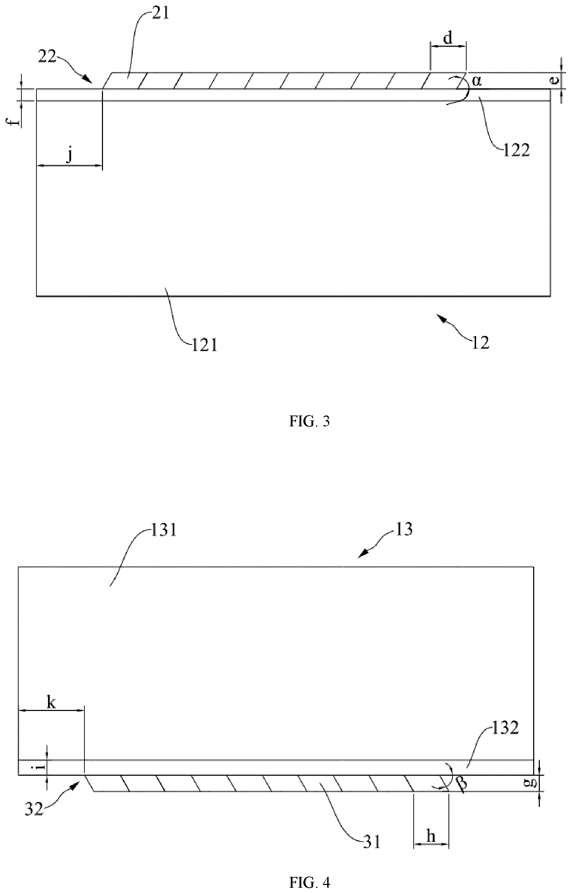

As shown in FIG. 3, the electrode assembly body 1 includes a positive electrode sheet, the positive electrode sheet includes a positive electrode sheet body 12, and the positive electrode tab 2 is arranged at an end of the positive electrode sheet body 12.

Before winding, laser cutting is performed on the positive electrode sheet, to form the positive electrode tab 2, including the multiple positive electrode tab units 21, on the positive electrode sheet. A part of the positive electrode sheet that is not subjected to the laser cutting is the positive electrode body 12. An end of each positive electrode tab unit 21 connected to the positive electrode body 12 is the root of the positive electrode tab unit 21, and the other end is the free end of the positive electrode tab unit 21.

As shown in FIG. 3, in some embodiments, each positive electrode tab unit 21 has the same shape and is parallelogram shaped.

During the laser cutting, two ends of the positive electrode tab 2 are removed, thereby defining a positive electrode notch portion 22 at each of the two ends of the positive electrode tab 2. Then the remaining middle part of the positive electrode tab 2 is further cut to form the multiple positive electrode tab units 21 that are all parallelogram shaped. A slit exists between two adjacent positive electrode tab units 21. In this way, after flattening, the two adjacent positive electrode tab units 21 do not interfere with each other, and each positive electrode tab unit 21 is neatly and orderly arranged towards the axis of the electrode assembly.

When the two ends of the positive electrode tab 2 are removed before winding, the size of the cut part at each end is less than or equal to 1000 mm along a length direction of the positive electrode sheet.

That is, in the embodiments, after winding to form the electrode assembly, the positive electrode tab 2 is arranged at an end of the positive electrode sheet, and the positive electrode notch portion 22 is defined at each of both ends of the positive electrode tab 2.

That is, before winding, each of the ends on the side of the positive electrode sheet arranged with the positive electrode tab 2 is defined with the positive electrode notch portion 22.

The size j of the positive electrode notch portion 22 is less than or equal to 1000 mm along an extension direction of the positive electrode sheet. The size j of the positive electrode notch portion 22 may be 500 mm, 600 mm, 700 mm, 800 mm, 900 mm, or 1000 mm.

The shape of each positive electrode tab unit 21 is parallelogram, the height e of the positive electrode tab unit 21 is in a range from 2mm to 10mm, the width d of the positive electrode tab unit 21 is in a range from 2mm to 40mm, and an inner angle of the positive electrode tab unit 21 is in a range from 45° to 135°. Since the shape of the positive electrode tab unit 21 is a parallelogram, the parallelogram has four inner angles, and the angles of the two opposite inner angles are substantially the same, and the sum of the inner angles of the four inner angles is 360°, thus limiting one inner angle is equivalent to limiting all the four inner angles. Taking FIG. 3 as an illustration, according to the geometric relationship, two of the four inner angles of the positive electrode tab unit 21 substantially have the same size as the angle α, i.e., α is in the range from 45° to 135°.

In the embodiments, a side edge of the positive electrode tab unit 21 connected to the electrode assembly body 1 is called a first side edge, and the size d of the first side edge is in the range from 2mm to 40mm. A side edge of the positive electrode tab unit 21 connected to the electrode assembly body 1 at an included angle is a second side edge, and the size of the second side edge is in the range from 2mm to 10mm. The angle between the first side edge and the second side edge of the positive electrode tab unit 21 may be in the range from 45° to 135°.

That is, before the positive electrode sheet is wound and the positive electrode tab 2 is bent, the height of the positive electrode tab unit 21 is in the range from 2mm to 10mm, the width of the positive electrode tab unit 21 is in the range from 2mm to 40mm, and the angle of inclination of the side edge of the positive electrode tab unit 21 relative to the extension line of the positive electrode sheet body 12 is in the range from 45° to 135°. As shown in FIG. 3, the width of the positive electrode tab unit 21 is denoted by d, and d is in the range from 2mm to 40mm; the height of the positive electrode tab unit 21 is denoted by e, and e is in the range from 2mm to 10mm; and α is the inclination angle of the side edge of the positive electrode tab unit 21 relative to the extension line of the positive electrode sheet body 12, and α is in the range from 45° to 135°.

Exemplarily, d is 2mm, 8mm, 14mm, 20mm, 26mm, 32mm, 38mm, or 40mm, as desired. e is 2mm, 4mm, 6mm, 8mm, or 10mm, as desired. α is 45°, 60°, 75°, 90°, 105°, or 135°, as desired.

In some embodiments, the positive electrode body 12 is coated with a positive material region 121, and a first transition region 122 is arranged between the positive electrode tab 2 and the positive material region 121. The first transition region 122 has a size of 2.5mm-4mm along the axis direction of the electrode assembly body 1.

In FIG. 3, the size of the first transition region 122 along the axis direction of the electrode assembly body 1 is denoted by f, which is 2.5mm-4mm. For example, f is 2.5mm, 3mm, 3.5mm, or 4mm.

In some embodiments, the size of the first transition region 122 along the axis direction of the electrode assembly body 1 is 3 mm, i.e., f is substantially equal to 3 mm.

As shown in FIG. 4, the electrode assembly body 1 includes a negative electrode sheet, the negative electrode sheet includes a negative electrode sheet body 13, and the negative electrode tab 3 is arranged at an end of the negative electrode sheet body 13.

Before winding, laser cutting is performed on the negative electrode sheet, to form the negative electrode tab 3, including the multiple negative electrode tab units 31, on the negative electrode sheet. A part of the negative electrode sheet that is not subjected to the laser cutting is the negative electrode body 13. An end of each negative electrode tab unit 31 connected to the negative electrode body 13 is the root of the negative electrode tab unit 31, and the other end is the free end of the negative electrode tab unit 31.

As shown in FIG. 4, in some embodiments, each negative electrode tab unit 31 has the same shape and is parallelogram shaped.

During the laser cutting, two ends of the negative electrode tab 3 are removed, thereby defining a negative electrode notch portion 32 at each of the two ends of the negative electrode tab 3. Then the remaining middle part of the negative electrode tab 3 is further cut to form the multiple negative electrode tab units 31 that are all parallelogram shaped. A slit exists between two adjacent negative electrode tab units 31. In this way, after flattening, the two adjacent negative electrode tab units 31 do not interfere with each other, and each negative electrode tab unit 31 is neatly and orderly arranged towards the axis of the electrode assembly.

When the two ends of the negative electrode tab 3 are removed before winding, the size of the cut part at each end is less than or equal to 1000 mm along a length direction of the negative electrode sheet. For example, the size of the cut part may be 500mm, 600mm, 700mm, 800mm, 900mm, or 1000mm.

That is, in the embodiments, after winding to form the electrode assembly, the negative electrode tab 3 is arranged at an end of the negative electrode sheet, and the negative electrode notch portion 32 is defined at each of both ends of the negative electrode tab 3.

That is, each of the ends on the side of the negative electrode sheet arranged with the negative electrode tab 3 is defined with the negative electrode notch portion 32.

The size k of the negative electrode notch portion 32 is less than or equal to 1000 mm along an extension direction of the negative electrode sheet. The size k of the negative electrode notch portion 32 may be 500 mm, 600 mm, 700 mm, 800 mm, 900 mm, or 1000 mm.

The shape of each negative electrode tab unit 31 is parallelogram, the height g of the negative electrode tab unit 31 is in a range from 2mm to 10mm, the width h of the negative electrode tab unit 31 is in a range from 2mm to 40mm, and an inner angle of the negative electrode tab unit 31 is in a range from 45° to 135°. Since the shape of the negative electrode tab unit 31 is a parallelogram, the parallelogram has four inner angles, and the angles of the two opposite inner angles are substantially the same, and the sum of the inner angles of the four inner angles is 360°, thus limiting one inner angle is equivalent to limiting all the four inner angles. Taking FIG. 4 as an illustration, according to the geometric relationship, two of the four inner angles of the negative electrode tab unit 31 substantially have the same size as the angle β, i.e., β is in the range from 45° to 135°.

In the embodiments, a side edge of the negative electrode tab unit 31 connected to the electrode assembly body 1 is called a third side edge, and the size h of the third side edge is in the range from 2mm to 40mm; a side edge of the negative electrode tab unit 31 connected to the electrode assembly body 1 at an included angle is a fourth side edge, and the size of the fourth side edge is in the range from 2mm to 10mm. The angle between the third side edge and the fourth side edge of the negative electrode tab unit 31 may be in the range from 45° to 135°.

Exemplarily, h is 2mm, 8mm, 14mm, 20mm, 26mm, 32mm, 38mm, or 40mm, as desired. g is 2mm, 4mm, 6mm, 8mm, or 10mm, as desired. β is 45°, 60°, 75°, 90°, 105°, or 135°, as desired.

That is, before the negative electrode sheet is wound and the negative electrode tab 3 is bent, the height of the negative electrode tab unit 31 is in the range from 2mm to 10mm, the width of the negative electrode tab unit 31 is in the range from 2mm to 40mm, and the angle of inclination of the side edge of the negative electrode tab unit 31 relative to the extension line of the negative electrode sheet body 13 is in the range from 45° to 135°. As shown in FIG. 4, the width of the negative electrode tab unit 31 is denoted by h, and h is in the range from 2mm to 40mm; the height of the negative electrode tab unit 31 is denoted by g, and g is in the range from 2mm to 10mm; and β is the inclination angle of the side edge of the negative electrode tab unit 31 relative to the extension line of the negative electrode sheet body 13, and β is in the range from 45° to 135°.

In some embodiments, the negative electrode body 13 is coated with a negative material region 131, and a second transition region 132 is arranged between the negative electrode tab 3 and the negative material region 131. The second transition region 132 has a size of 1.5mm-3mm along the axis direction of the electrode assembly body 1.

In FIG. 4, the size of the second transition region 132 along the axis direction of the electrode assembly body 1 are denoted by i, which is 1.5mm-3mm. For example, i is 1.5mm, 2mm, 2.5mm, or 3mm.

In some embodiments, the size of the second transition region 132 along the axis direction of the electrode assembly body 1 is 2mm, i.e., i is substantially equal to 2mm.

It is required to ensure that the size of the second transition region 132 along the axis direction of the electrode assembly body 1 is smaller than the size of the first transition region 122 along the axis direction of the electrode assembly body 1.

In some embodiments, a hollow cylindrical cavity 11 is defined in the electrode assembly body 1, and the diameter b of the hollow cylindrical cavity 11 is in a range from 4mm to 8mm. For example, b is 4mm, 5mm, 6mm, 7mm, or 8mm.

The hollow cylindrical cavity 11 is a part for a needle to be inserted, and the electrode sheet is wound around the needle to form the electrode assembly. After the needle is removed, the hollow cylindrical cavity 11 is defined in the electrode assembly, and the diameter of the hollow cylindrical cavity 11 is the substantially same as or slightly greater than the diameter of the needle.

In some embodiments, the positive electrode tab 2 and the negative electrode tab 3 are both made of current collecting foils. The electrode assembly is formed by winding the positive electrode sheet, the negative electrode sheet, and the diaphragm in a certain way for a certain number of circles.

In the embodiments, after the winding is completed, the positive electrode tab unit 21 is arranged substantially perpendicular to the axis of the electrode assembly body 1 by flattening, and the negative electrode tab unit 31 is arranged substantially perpendicular to the axis of the electrode assembly body 1 by flattening. With the flattening method, the size of the exposed part of the foil may be less than 1mm, which is conducive to the improvement of the battery capacity and "overhang" design, and thus to the improvement of the energy density of the cell. After flattening, the weldable thickness of the electrode tab is consistent, avoiding the phenomenon of weld-through when welding with the sink plate subsequently. The positive electrode tab 2 includes multiple positive electrode tab units 21 and the negative electrode tab 3 includes multiple negative electrode tab units 31, such that the electrode tabs will not accumulate and block in the center hole of the electrode assembly after flattening, thus not affecting the subsequent process.

In the embodiments, the positive electrode sheet is laser cut and molded to form a multi-electrode-tab positive electrode sheet, and the negative electrode sheet is laser cut and molded to form a multi-electrode-tab negative electrode sheet.

Before winding, the positive electrode tab units 21 and the negative electrode tab units 31 are pre-bent. Each positive electrode tab unit 21 is pre-bent on an over-roller before winding into the sheet, and the pre-bending angle is greater than 0° and equal to or less than 90°. Each negative electrode tab unit 31 is pre-bent on the over-roller before winding into the sheet, and the pre-bending angle is greater than 0° and equal to or less than 90°. The winding operation is then performed to initially form a winding core. Thereafter, the positive electrode tab units 21 and the negative electrode tab units 31 are flattened using a flattening equipment, and each electrode tab of the flattened winding core is bent toward the axis of the hollow cylindrical cavity 11 and arranged in a neat and orderly manner. Each electrode tab of the flattened winding core is bent toward the axis of the hollow cylindrical cavity 11 at an angle of 60°-90°. The electrode assembly is formed after the flattening is completed.

In other embodiments, the winding operation may be performed first, followed by a pre-bending operation, and finally a flattening operation, as long as the pre-bending operation precedes the flattening operation.

By flattening the positive electrode tab unit 21 and the negative electrode tab unit 31, there is no rotation of the positive electrode tab unit 21 and the negative electrode tab unit 31 during the process, and no metal chips are produced, which will not affect the safety performance of the battery; pre-bending followed by flattening ensures the consistency of the electrode tab thickness after flattening, thus reducing the exposed size of foil, and increasing the width of the positive and negative material regions while the total height of the electrode assembly remains unchanged. In this way, the capacity and "overhang" design of the electrode assembly may be improved.

### Embodiment 2

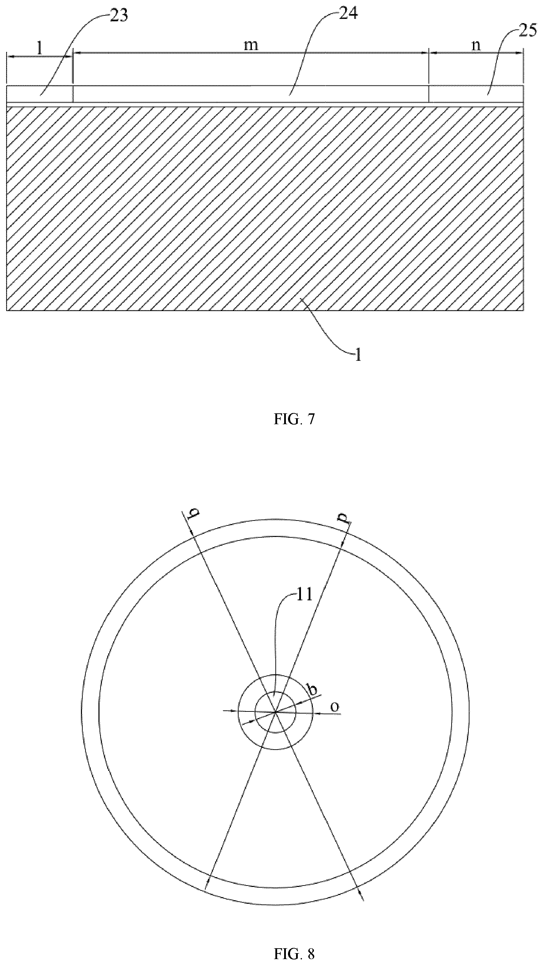

As shown in FIGS. 7-FIG. 10, embodiments of the present disclosure further provide an electrode assembly.

In the embodiments, the electrode assembly includes an electrode assembly body 1 and a current collector.

The electrode assembly body 1 is wound in shape.

The current collector is arranged at an end of the electrode assembly body 1 and includes multiple current collector units each bent towards an axis of the electrode assembly body 1. The angle between each current collector unit and the axis of the electrode assembly body 1 is in a range from 0° to 90°, such as 0°, 15°, 30°, 45°, 60°, 75°, or 90°.

In the embodiments, the angle between each current collector unit and the axis of the electrode assembly body 1 is the angle γ in embodiment 1.

In the electrode assembly provided in the embodiments, the current collector includes multiple current collector units, and the multiple current collector units are flattened such that the angle between each current collector unit and the axis of the electrode assembly body 1 is in the range from 0° to 90°, which may avoid the current collector unit from overturning relative to the electrode assembly, control the exposed size of the current collector relative to the electrode assembly, and increase the axial size proportion of the material region to the electrode assembly, thereby improving the battery capacity and "overhang" design, and thus increasing the energy density of the cell.

The orderly arrangement of multiple current collector units toward the center of the electrode assembly is conducive to improving the subsequent welding stability of the current collector units with the sink plate. The multiple current collector units are arranged in an orderly manner toward the center of the electrode assembly, such that the current collector does not rotate and there is no friction, and no metal chips are generated during processing, which will not affect the safety performance of the electrode assembly, and thus ensure the safety performance of the energy storage device.

In some embodiments, the current collector is wound in shape, and the current collector includes a front portion 23 of the current collector, a middle portion 24 of the current collector, and a back portion 25 of the current collector, which are arranged in sequence from the center of the electrode assembly along a winding path of the current collector.

In the embodiments, the structure of the current collector unit is the same as the structure of the current collector unit in Embodiment 1, and reference thereto may be made to FIG. 3 or FIG. 4 in Embodiment 1.

As in Embodiment 1, in the embodiments, the shape of each current collector unit is parallelogram, the height e of the current collector unit is in a range from 2mm to 10mm, the width d of the current collector unit is in a range from 2mm to 40mm, and an inner angle of the current collector unit is in a range from 45° to 135°. Since the shape of the positive electrode tab unit 21 is a parallelogram, the parallelogram has four inner angles, and the angles of the two opposite inner angles are substantially the same, and the sum of the inner angles of the four inner angles is 360°, thus limiting one inner angle is equivalent to limiting all the four inner angles.

That is, the height e of the current collector unit is in the range from 2mm to 10mm, the width d of the current collector unit is in the range from 2mm to 40mm, and an inner angle of the current collector unit is in the range from 45° to 135° before the current collector unit is bent.

Exemplarily, d is 2mm, 8mm, 14mm, 20mm, 26mm, 32mm, 38mm, or 40mm, as desired. e is 2mm, 4mm, 6mm, 8mm, or 10mm, as desired. α is 45°, 60°, 75°, 90°, 105°, or 135°, as desired.

A slit exists between two adjacent current collector units, such that the two adjacent current collector units do not interfere with each other during the flattening process, and each current collector unit is arranged in a neat and orderly manner toward the axis of the electrode assembly.

A spacing of the slit may be in a range from 0mm to 200mm. Exemplarily, the spacing of the slit may be 40 mm, 80 mm, 120 mm, 160 mm, or 200 mm.

As shown in FIG. 7, before the electrode sheet is wound, an end of the electrode sheet is cut along the length direction of the electrode sheet, such that the end is formed with the front portion 23 of the current collector, the middle portion 24 of the current collector, and the back portion 25 of the current collector.

In the embodiments, from the center of the electrode assembly along the winding path of the current collector, the size of the front portion 23 of the current collector is 1, the size of the middle portion 24 of the current collector is m, and the size of the back portion 25 of the current collector is n.

In some embodiments, from the center of the electrode assembly along the winding path of the current collector, the size of the front portion 23 of the current collector is in a range from 0mm to 1000mm; and/or, the size of the middle portion 24 of the current collector is in a range from 1000mm to 8000mm.

From the center of the electrode assembly along the winding path of the current collector, the size of the back portion 25 of the current collector may be in a range from 0mm to 1000mm.

In some embodiments, the size l of the front portion 23 of the current collector is in the range from 0mm to 1000mm, the size m of the middle portion 24 of the current collector is in the range from 1000mm to 8000mm, and the size n of the back portion 25 of the current collector is in the range from 0mm to 1000mm.

Exemplarily, the size l of the front portion 23 of the current collector is 100mm, 200mm, 300mm, 400mm, 500mm, 600mm, 700mm, 800mm, 900mm, or 1000mm. The size m of the middle portion 24 of the current collector is 1000mm, 2000mm, 3000mm, 4000mm, 5000mm, 6000mm, 7000mm, or 8000mm. The size n of the back portion 25 of the current collector is 100mm, 200mm, 300mm, 400mm, 500mm, 600mm, 700mm, 800mm, 900mm, or 1000mm.

In some embodiments, the dimension l of the front portion 23 of the current collector and the dimension n of the back portion 25 of the current collector may both be 0mm.

The absolute value of the difference in sizes between the front portion 23 of the current collector and the back portion 25 of the current collector from the center of the electrode assembly along the winding path of the current collector may be in a range from 0mm to 1000mm. That is, in some embodiments, the absolute value of the difference between l and n is in the range from 0mm to 1000mm. Exemplarily, in some embodiments, the absolute value of the difference between l and n is 100mm, 200mm, 300mm, 400mm, 500mm, 600mm, 700mm, 800mm, 900mm, or 1000mm.

In some embodiments, the absolute value of the difference in sizes between the front portion 23 of the current collector and the middle portion 24 of the current collector from the center of the electrode assembly along the winding path of the current collector is in a range from 0mm to 8000mm. Exemplarily, in some embodiments, the absolute value of the difference in sizes between the front portion 23 of the current collector and the middle portion 24 of the current collector is 1000mm, 2000mm, 3000mm, 4000mm, 5000mm, 6000mm, 7000mm, or 8000mm.

From the center of the electrode assembly along the winding path of the current collector, the absolute value of the difference in sizes between the back portion 25 of the current collector and the middle portion 24 of the current collector is in a range from 0mm to 8000m. Exemplarily, the absolute value of the difference in sizes between the back portion 25 of the current collector and the middle portion 24 of the current collector is 1000mm, 2000mm, 3000mm, 4000mm, 5000mm, 6000mm, 7000mm, or 8000mm.

As shown in FIG. 8, in some embodiments, the outer diameter o of a winding body formed after winding of the front portion 23 of the current collector is in a range from 1mm to 100mm; and/or, the outer diameter p of a winding body formed after winding of the middle portion 24 of the current collector is in a range from 1mm to 100mm.

The outer diameter q of a winding body formed after winding of the back portion 25 of the current collector is in a range from 1mm to 100mm.

In the embodiments, the outer diameter o of the winding body formed after winding of the front portion 23 of the current collector is in the range from 1mm to 100mm, the outer diameter p of the winding body formed after winding of the middle portion 24 of the current collector is in the range from 1mm to 100mm, and the outer diameter q of the winding body formed after winding of the back portion 25 of the current collector is in the range from 1mm to 100mm.

Exemplarily, in some embodiments, the outer diameter o of the winding body formed after winding of the front portion 23 of the current collector is 10 mm, 20 mm, 30 mm, 40 mm, 50 mm, 60 mm, 70 mm, 80 mm, 90 mm, or 100 mm. The outer diameter p of the winding body formed after winding of the middle portion 24 of the current collector is 10 mm, 20 mm, 30 mm, 40 mm, 50 mm, 60 mm, 70 mm, 80 mm, 90 mm, or 100 mm. The outer diameter q of the winding body formed after winding of the back portion 25 of the current collector is 10 mm, 20 mm, 30 mm, 40 mm, 50 mm, 60 mm, 70 mm, 80 mm, 90 mm, or 100 mm.

The outer diameter q of the winding body formed after winding of the back portion 25 of the current collector may be greater than the outer diameter p of the winding body formed after winding of the middle portion 24 of the current collector. The outer diameter p of the winding body formed after winding of the middle portion 24 of the current collector may be greater than the outer diameter o of the winding body formed after winding of the front portion 23 of the current collector.

For clarity of illustration, in FIG. 8, only the following are illustrated: the outer contour of the winding body formed after winding of the front portion 23 of the current collector, the inner contour of the winding body formed after winding of the front portion 23 of the current collector, the outer contour of the winding body formed after winding of the middle portion 24 of the current collector, and the outer contour of the winding body formed after winding of the back portion 25 of the current collector. The outer contour of the winding body formed after winding of the back portion 25 of the current collector is also the outer contour of the electrode assembly. At least one circle of current collector units may be arranged between the outer contour of the winding body formed after winding of the front portion 23 of the current collector and the inner contour of the winding body formed after winding of the front portion 23 of the current collector. At least one circle of current collector units may be arranged between the outer contour of the winding body formed after winding of the front portion 23 of the current collector and the outer contour of the winding body formed after winding of the middle portion 24 of the current collector. At least one circle of current collector units may be arranged between the outer contour of the winding body formed after winding of the middle portion 24 of the current collector has and the outer contour of the winding body formed after the winding of the back portion 25 of the current collector.

In some embodiments, the outer diameter q of the winding body formed after the winding of the back portion 25 of the current collector is the outer diameter u of the electrode assembly body 1. In some embodiments, the outer diameter u of the electrode assembly body 1 is in a range from 15 mm to 100 mm.

In some embodiments, a hollow cylindrical cavity 11 is defined in the electrode assembly body 1. The hollow cylindrical cavity 11 exists in the center of the electrode assembly after it is wound and formed.

The diameter b of the hollow cylindrical cavity may be is in a range from 1mm to 10mm.

In some embodiments, the difference in sizes between the outer diameter o of the winding body formed after winding of the front portion 23 of the current collector and the diameter b of the hollow cylindrical cavity 11 is in a range from 0mm to 100mm; and/or, the difference between the outer diameter p of the winding body formed after winding of the middle portion 24 of the current collector and the outer diameter o of the winding body formed after winding of the front portion 23 of the current collector is in the range from 0mm to 100mm.

The difference in sizes between the outer diameter q of the winding body formed after winding of the back portion 25 of the current collector and the outer diameter p of the winding body formed after winding of the middle portion 24 of the current collector is in the range from 0mm to 100mm.

In some embodiments, the difference in sizes between the outer diameter o of the winding body formed after winding of the front portion 23 of the current collector and the diameter b of the hollow cylindrical cavity 11 is in the range from 0mm to 100mm, the difference in sizes between the outer diameter p of the winding body formed after winding of the middle portion 24 of the current collector and the outer diameter o of the winding body formed after winding of the front portion 23 of the current collector is in the range from 0mm to 100mm, and the difference between the outer diameter q of the winding body formed after winding of the back portion 25 of the current collector and the outer diameter p of the winding body formed after the winding of the middle portion 24 of the current collector is in the range from 0mm to 100mm.

Exemplarily, in some embodiments, the difference in sizes between the outer diameter o of the winding body formed after the winding of the front portion 23 of the current collector and the diameter b of the hollow cylindrical cavity 11 is 10mm, 20mm, 30mm, 40mm, 50mm, 60mm, 70mm, 80mm, 90mm, or 100mm. The difference between the outer diameter p of the winding body formed after winding of the middle portion 24 of the current collector and the outer diameter o of the winding body formed after winding of the front portion 23 of the current collector is 10mm, 20mm, 30mm, 40mm, 50mm, 60mm, 70mm, 80mm, 90mm, or 100mm. The difference between the outer diameter q of the winding body formed after winding of the back portion 25 of the current collector and the outer diameter p of the winding body formed after the winding of the middle portion 24 of the current collector is 10mm, 20mm, 30mm, 40mm, 50mm, 60mm, 70mm, 80mm, 90mm, or approximately100mm.

In some embodiments, the front portion 23 of the current collector is in the form of a monolithic sheet or includes multiple current collector units; and/or, the middle portion 24 of the current collector is in the form of a monolithic sheet or includes multiple current collector units.

The back portion 25 of the current collector is in the form of a monolithic sheet or includes multiple current collector units.

In some embodiments, the front portion 23 of the current collector includes multiple current collector units, middle portion 24 of the current collector includes multiple current collector units, and the back portion 25 of the current collector includes multiple current collector units.

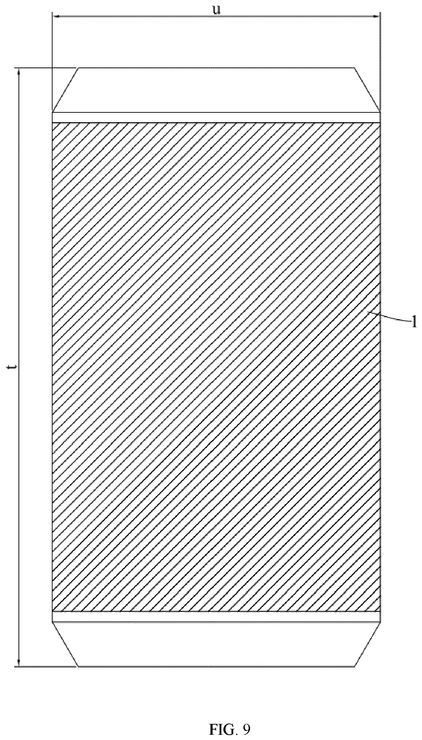

As shown in FIG. 9, after the initial winding of the electrode assembly is completed, the current collector is required to be flattened. Before flattening the current collector, the axial size t of the electrode assembly may be in a range from 30mm to 300mm. The outer diameter u of the electrode assembly body 1 may be in a range from 15mm to 100mm.

Exemplarily, the axial size t of the electrode assembly is 100mm, 200mm, or 300mm.

Exemplarily, the outer diameter u of the electrode assembly body 1 is 20mm, 40mm, 60mm, 80mm, or 100mm.

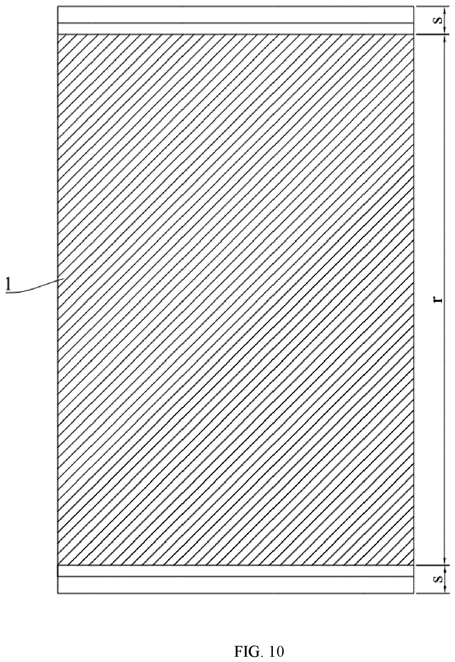

As shown in FIG. 10, in some embodiments, an outer side of the electrode assembly body 1 is wound with a diaphragm with a size r of 20mm-300mm along the axis of the electrode assembly.

Exemplarily, the size r of the diaphragm is 100mm, 200mm, or 300mm.

In some embodiments, along the axis of the electrode assembly, the exposed size s of the current collector relative to the diaphragm is in a range from 0mm to 10mm.

Exemplarily, the exposed size s of the current collector relative to the diaphragm is 2mm, 4mm, 6mm, 8mm, or 10mm.

In some embodiments, upper and lower ends of the diaphragm are exposed with the current collector. The exposed size of the upper end of the diaphragm is s1, with s1 being in a range from 0mm to 10mm. The exposed size of the lower end of the diaphragm is s2, with s2 being in a range from 0mm to 10mm. Exemplarily, s1 is 2mm, 4mm, 6mm, 8mm, or 10mm; s2 is 2mm, 4mm, 6mm, 8mm, or 10mm.

In some embodiments, the current collector is wound in shape, and all the current collector units are wound and arranged to form multiple current collector circles, each of which includes several current collector units arranged in sequence.

In the related art, after the current collector units of the electrode assembly are welded with the sink plate, the accuracy of the flatness of the welding surface can only achieve no more than 0.3mm, with the welding yield of 98.5%.

Among two adjacent current collector circles, the one current collector circle farther away from the axis of the electrode assembly body 1 is the outer current collector circle, and the other current collector circle is the inner current collector circle. Along the radial direction of the electrode assembly body 1, the current collector units of the outer current collector circle may partially cover the current collector units of the inner current collector circle. Such an arrangement may ensure that the flatness of the welding surface of the current collector unit of the electrode assembly is less than or equal to 0.1mm after the welding with the sink plate is completed, and the welding yield is increased to 100%.

### Embodiment 3

Embodiments of the present disclosure further provide an energy storage device. The energy storage device includes a housing and the electrode assembly in Embodiment 1 or Embodiment 2. The electrode assembly is arranged in the housing.

The energy storage device may be a battery. After the electrode assembly is completely manufactured, the electrode assembly is welded to the sink plate and assembled into the housing to complete the assembly of the battery.

Compared with a conventional single-current-collector energy storage device, the energy storage device provided in the embodiments has the internal resistance of the current collector of 1/1000.

## Claims

1. An electrode assembly, comprising:
an electrode assembly body (1), wound in shape; and
a current collector, arranged at an end of the electrode assembly body (1) and comprising a plurality of current collector units each bent towards an axis of the electrode assembly body (1); wherein an angle between each current collector unit and the axis of the electrode assembly body (1) is in a range from 0° to 90°.

2. The electrode assembly as claimed in claim 1, wherein the current collector is wound in shape and comprises a front portion (23) of the current collector, a middle portion (24) of the current collector, and a back portion (25) of the current collector, which are arranged in sequence from a center of the electrode assembly along a winding path of the current collector.

3. The electrode assembly as claimed in claim 2, wherein an absolute value of a difference in size between the front portion (23) and the back portion (25) from the center of the electrode assembly along the winding path of the current collector is in a range from 0mm to 1000mm.

4. The electrode assembly as claimed in claim 2, wherein an absolute value of a difference in size between the front portion (23) and the middle portion (24) from the center of the electrode assembly along the winding path of the current collector is in a range from 0mm to 8000mm.

5. The electrode assembly as claimed in claim 2, wherein an absolute value of a difference in size between the back portion (25) and the middle portion (24) from the center of the electrode assembly along the winding path of the current collector is in a range from 0mm to 8000mm.

6. The electrode assembly as claimed in claim 2, wherein from the center of the electrode assembly along the winding path, the electrode assembly satisfies at least one of:
a size l of the front portion (23) is in a range from 0mm to 1000mm; and
a size m of the middle portion (24) is in a range from 1000mm to 8000mm.

7. The electrode assembly as claimed in claim 2, wherein from the center of the electrode assembly along the winding path, a size n of the back portion (25) is in a range from 0mm to 1000mm.

8. The electrode assembly as claimed in claim 2, satisfying at least one of:
an outer diameter o of a winding body formed after winding of the front portion (23) is in a range from 1mm to 100mm; and
an outer diameter p of a winding body formed after winding of the middle portion (24) is in a range from 1mm to 100mm.

9. The electrode assembly as claimed in claim 2, wherein an outer diameter q of a winding body formed after winding of the back portion (25) is in a range from 1mm to 100mm.

10. The electrode assembly as claimed in claim 2, wherein a hollow cylindrical cavity (11) is defined in the electrode assembly body (1), and a diameter b of the hollow cylindrical cavity (11) is in a range from 1mm to 10mm.

11. The electrode assembly as claimed in claim 2, satisfying at least one of:
a hollow cylindrical cavity (11) is defined in the electrode assembly body (1), and a difference between an outer diameter o of a winding body formed after winding of the front portion (23) and a diameter b of the hollow cylindrical cavity (11) is in a range from 0mm to 100mm; and
a difference between an outer diameter p of a winding body formed after winding of the middle portion (24) and the outer diameter o of the winding body formed after winding of the front portion (23) is in a range from 0mm to 100mm.

12. The electrode assembly as claimed in claim 2, wherein a difference between an outer diameter q of a winding body formed after winding of the back portion (25) and an outer diameter p of a winding body formed after winding of the middle portion (24) is in a range from 0mm to 100mm.

13. The electrode assembly as claimed in claim 2, satisfying at least one of:
the front portion (23) is in the form of a monolithic sheet or comprises a plurality of current collector units; and
the middle portion (24) is in the form of a monolithic sheet or comprises a plurality of current collector units.

14. The electrode assembly as claimed in claim 2, wherein the back portion (25) is in the form of a monolithic sheet or comprises a plurality of current collector units.

15. The electrode assembly as claimed in any one of claims 2-14, wherein an outer side of the electrode assembly body (1) is wound with a diaphragm with a size r of 20mm-300mm along an axis of the electrode assembly.

16. The electrode assembly as claimed in claim 15, wherein along the axis of the electrode assembly, a size s of a part of the current collector exposed from the diaphragm is in a range from 0mm to 10mm.

17. The electrode assembly as claimed in any one of claims 1-14, wherein an axial size t of the electrode assembly is in a range from 30mm to 300mm.

18. The electrode assembly as claimed in any one of claims 1-14, wherein an outer diameter u of the electrode assembly body (1) is in a range from 15mm to 100mm.

19. The electrode assembly as claimed in any one of claims 1-14, wherein a shape of each current collector unit is a parallelogram, a height e of the each current collector unit is in a range from 2mm to 10mm, a width d of the each current collector unit is in a range from 2mm to 40mm, and an inner angle of the each current collector unit is in a range from 45° to 135°.

20. The electrode assembly as claimed in any one of claims 1-14, wherein a slit exists between adjacent two of the plurality of current collector units, and a spacing of the slit is in a range from 0mm to 200mm.

21. The electrode assembly as claimed in any one of claims 1-12, wherein the current collector is wound in shape, all the plurality of current collector units are wound and arranged to form a plurality of current collector circles, and each current collector circle comprises some of the plurality of current collector units arranged in sequence.

22. The electrode assembly as claimed in claim 21, wherein among adjacent two of the plurality of current collector circles, one current collector circle farther away from the axis of the electrode assembly body (1) is an outer current collector circle, and the other current collector circle is an inner current collector circle; and along a radial direction of the electrode assembly body (1), the plurality of current collector units of the outer current collector circle partially cover the plurality of current collector units of the inner current collector circle.

23. An energy storage device, comprising:
a housing; and
the electrode assembly as claimed in any one of claims 1-22, arranged in the housing.
